# EUROPÄISCHE PATENTANMELDUNG

(11) **EP 1 039 200 A2**
(43) Veröffentlichungstag der Anmeldung: **27.09.2000**
(21) Anmeldenummer: 00106514.3
(22) Anmeldetag: 25.03.2000
(51) Int. Cl.: F16L 9/147

(54) **Metall-Kunststoff-Verbundrohr**

(30) Priorität: 25.03.1999 DE 19913445; 12.05.1999 DE 19921910
(71) Anmelder: Hewing GmbH, 48607 Ochtrup (DE)
(72) Erfinder: Riesselmann, Franz-Josef, 49393 Lohne (DE); Hansen, Jörg, 48493 Wettringen (DE); Freermann, Reinhold, 48607 Ochtrup (DE); Weke, Dieter, 48465 Steinfurt (DE); Feldkamp, Alfred, 48607 Ochtrup (DE)
(74) Vertreter: Hilleringmann, Jochen, Dipl.-Ing.

(57) **Zusammenfassung**

Das Metall-Kunststoff-Verbundrohr ist mit einem Kunststoff-Innenrohr (10) und einer Metallummantelung (20) um das Kunststoff-Innenrohr (10) versehen. Die Metallummantelung (20) ist durch Legen eines Längsränder (14) aufweisenden Metallbandes (12) um das Kunststoff-Innenrohr (10) ausgebildet. Die Längsränder (14) sind einander überlappen und innerhalb ihres Überlappungsbereichs (16) verklebt. Die Kleberverbindung (18) der Längsränder (14) des Metallbandes (12) ist insbesondere in Abhängigkeit von der Temperatur nicht lösbar.

## Beschreibung

Die Erfindung betrifft ein Metall-Kunststoff-Verbundrohr mit einem Kunststoff-Innenrohr und einer Metallummantelung um das Kunststoff-Innenrohr, wobei die Metallummantelung durch Legen eines Längsränder aufweisenden Metallbandes um das Kunststoff-Innenrohr ausgebildet ist und die Längsränder einander überlappen und innerhalb ihres Überlappungsbereichs verklebt sind.

Metall-Kunststoff-Verbundrohre werden u.a. kontinuierlich dadurch hergestellt, dass um ein extrudiertes Innenrohr ein Metallband gelegt wird, das mit seiner Längserstreckung parallel zur axialen Erstreckung des Innenrohres zugeführt und durch Formen um das Innenrohr gelegt wird. Dabei stoßen die Längsränder des Metallbandes aneinander und werden verschweißt (Längsnahtverschweißung) oder aber die Längsränder überlappen einander und sind in diesem Bereich verklebt. Die zur Anwendung kommenden Kleber sind recht temperaturempfindlich, weshalb die Gefahr von Undichtigkeiten der Kleberverbindung besteht, womit die Funktionstüchtigkeit der Metall-Ummantelung des Innenrohrs, nämlich als Diffusions- und Dampfsperre zu wirken, nicht mehr gewährleistet ist.

Der Erfindung liegt die Aufgabe zugrunde, ein Metall-Kunststoff-Verbundrohr zu schaffen, das auch bei erhöhten Temperaturen bzw. mechanischen Belastungen funktionstauglich bleibt, was die Diffusions-, Dampfdichtigkeit und Druckbelastbarkeit betrifft.

Zur Lösung dieser Aufgabe ist gemäß der Erfindung bei einem Rohr der eingangs genannten Art vorgesehen, dass die Kleberverbindung der Längsränder des Metallbandes insbesondere in Abhängigkeit von der Temperatur nicht lösbar ist.

Nach der Erfindung wird also ein Kleber verwendet, der zu einer im Hinblick auf die zu erwartende Temperatur und mechanischen Belastungen des Rohres nicht mehr lösbaren Verbindung der sich überlappenden Längsränder des Metallbandes führt. Die Kleberverbindung besteht also erfindungsgemäß nicht aus einem thermoplastischen sondern aus einem duroplastischen oder elastischen Kunststoffmaterial. Hier bietet sich als duroplastisches Kunststoffmaterial insbesondere ein Zwei- oder Mehrkomponentenkleber auf Epoxid-Harz-Basis und als elastisches Kunststoffmaterial ein Copolymer auf Basis eines vernetzten/vernetzbaren PE an.

Insbesondere handelt es sich bei dem Innenrohr um ein PEX-Rohr; außen um der Ummantelung befindet sich zweckmäßigerweise ein Kunststoff-Außenrohr aus ebenfalls insbesondere vernetztem/vernetzbarem PE, das auf die Metall-Ummantelung aufextrudiert ist.

Das erfindungsgemäße Konzept ist darin zu sehen, dass durch die Verklebung eines "nackten" Metallbandes ein Metallrohr hergestellt wird, das Druckkräfte aufnehmen kann (vergleichbar mit verschweißten Rohren, wie Prüfungen ergeben haben). Dieses Metallrohr kann bei höheren Temperaturen, d.h. > 100 °C eingesetzt werden, ohne dass die Berstdrücke fallen.

Der Unterschied zu bekannten Kunststoff/Metall-Verbundrohren besteht darin, dass das Metallrohr nach der Erfindung eine "tragende" Funktion einnimmt, was zu einer Reduzierung der Innenrohrwanddicken führt. Durch den Einsatz von unbeschichteten Metall- insbesondere Aluminiumbändern ist auch die Herstellung etwas preiswerter.

Neben der tragenden Funktion sind die guten Sperreigenschaften von Metallen natürlich gegeben. Die Banddicken sind so ausgelegt, das ein Reißen durch die stärkere Ausdehnung von Kunststoffrohren verhindert wird. Sämtliche vorstehend genannten Eigenschaften werden insbesondere mit einem Epoxid-Harz-Kleber erreicht.

Ein anderes Problem bei Rohren mit überlappten Metall- insbesondere Aluminiumbandrändern ist die Bildung eines Hohlraumes im Bereich der Überlappung zwischen dem Innenrohr und dem Aluminiumband. Das führt zur Ansammlung von Wasser, das zu Beulen, Enthaftungen und Aufbrechen des Aluminiumbandes im Überlappungsbereich führen kann. Dann ist die Sperreigenschaft stark gemindert, das Rohr optisch defekt. Durch einen zusätzlichen Haftermittler, der auf das Innenrohr aufgetragen wird, kann das verhindert werden. Der Haftvermittler muss entsprechende Eigenschaften aufweisen (leicht fließen, gut vernetzbar sein, gute Haftung zum Innenrohr und zur Aluminium-Ummantelung haben).

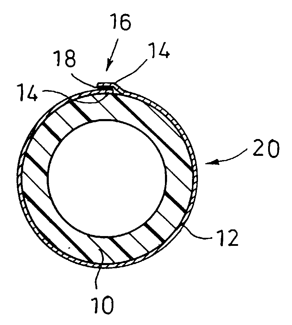

In der Zeichnung ist ein bevorzugtes Ausführungsbeispiel der Erfindung dargestellt.

Um ein Innenrohr 10 aus vernetztem PE ist ein Al-Band 12 gelegt, dessen Längsränder 14 einander überlappen. Im Überlappungsbereich 16 sind diese Längsränder 14 mittels eines Klebers 18 miteinander dauerhaft und nicht lösbar (bezogen auf die Temperatur- und mechanischen Belastungen, für die das Verbundrohr ausgelegt ist) verbunden. Der Kleber 18 weist ein Epoxid-Harz auf. Außen um die Metall-Ummantelung 20 kann ein Kunststoff-Außenrohr (nicht dargestellt) angeordnet sein. Ein solches Rohr ist z.B. in der Flugzeugindustrie einsetzbar und dient zum Transport von Fluiden (Hydraulikflüssigkeit) des Steuerungssystems der Flugzeuge.

Alternativ kann als Kleber 18 auch ein PEX-Material eingesetzt werden. Dieses Material wird vorzugsweise strahlenvernetzt. Bei Anordnung eines Außenrohres aus PE-Material können beide - Außenrohr und Kleber - in einem gemeinsamen Arbeitsschritt strahlenvernetzt werden.

Bei dem hier beschriebenen Verbundrohr befindet sich de Kleber 18 vorzugsweise lediglich im Überlappungsbereich 16 der Längsränder 14. Die übrigen Flächen des für die Metall-Ummantelung 20 verwendeten Bandes sind vorzugsweise frei von Kleber. Insbesondere ist die Metall-Ummantelung 20 nicht mit dem Innenrohr 10 verklebt. Man kann hier jedoch einen Kleber einsetzen. Die Metall-Ummantelung 20 ist die eigentliche druckstabile Schicht des Verbundrohres, dessen Innenrohr 10 nunmehr dünnwandiger ausgelegt sein kann.

## Patentansprüche

1. Metall-Kunststoff-Verbundrohr mit
- einem Kunststoff-Innenrohr (10) und
- einer Metallummantelung (20) um das Kunststoff-Innenrohr (10), wobei
- die Metallummantelung (20) durch Legen eines Längsränder (14) aufweisenden Metallbandes (12) um das Kunststoff-Innenrohr (10) ausgebildet ist und
- die Längsränder (14) einander überlappen und innerhalb ihres Überlappungsbereichs (16) verklebt sind,
**dadurch gekennzeichnet,**
- dass die Kleberverbindung (18) der Längsränder (14) des Metallbandes (12) insbesondere in Abhängigkeit von der Temperatur nicht lösbar ist.

2. Metall-Kunststoff-Verbundrohr nach Anspruch 1, dadurch gekennzeichnet, dass als Klebermaterial (18) ein PEX-Haftvermittler oder ein Haftvermittler auf PEX-Basis vorgesehen ist.

3. Metall-Kunststoff-Verbundrohr nach Anspruch 2, dadurch gekennzeichnet, dass die Metallummantelung von einem Außenrohr aus PEX-Material umgeben ist und dass dieses Außenrohr zusammen mit dem Klebermaterial strahlenvernetzt wird.

4. Metall-Kunststoff-Verbundrohr nach Anspruch 1, dadurch gekennzeichnet, dass als Klebermaterial (18) ein Zwei- oder Mehrkomponenten-Kleber vorgesehen ist.

5. Metall-Kunststoff-Verbundrohr nach Anspruch 1 oder 4, dadurch gekennzeichnet, dass als Klebermaterial (18) ein Material auf Basis eines Epoxid-Harzes eingesetzt wird.

6. Metall-Kunststoff-Verbundrohr nach einem der Ansprüche 1 bis 5, dadurch gekennzeichnet, dass das Metallband (12) Aluminium aufweist.

7. Metall-Kunststoff-Verbundrohr nach einem der Ansprüche 1 bis 6, dadurch gekennzeichnet, dass das Kunststoff-Innenrohr (10) vernetztes Polyethylen aufweist.

8. Metall-Kunststoff-Verbundrohr nach einem der Ansprüche 1 bis 7, dadurch gekennzeichnet, dass außen um die Metallummantelung (20) ein Kunststoff-Außenrohr angeordnet ist.
